# EUROPÄISCHE PATENTSCHRIFT

(11) **EP 0 816 057 B1**
(45) Veröffentlichungstag und Bekanntmachung des Hinweises auf die Patenterteilung: **06.11.2002**
(21) Anmeldenummer: 97107096.6
(22) Anmeldetag: 29.04.1997
(51) Int. Cl.: B29D 30/52, B29C 43/24, B29C 47/06, B29C 63/00

(54) **Herstellung eines Fahrzeugluftreifens mit Lauffläche**
Manufacture of a pneumatic vehicle tyre having a tread
Fabrication d'un bandage pneumatique avec bande de roulement pour véhicule

(30) Priorität: 02.05.1996 DE 19617598
(43) Veröffentlichungstag der Anmeldung: 07.01.1998
(73) Patentinhaber: Continental Aktiengesellschaft, 30165 Hannover (DE)
(72) Erfinder: Köhne, Stephan, 52072 Aachen (DE)

(56) Entgegenhaltungen:
- FR-A- 1 234 593
- GB-A- 528 335
- US-A- 4 556 376
- US-A- 4 927 482
- US-A- 5 030 079

## Beschreibung

Die Erfindung betrifft ein Verfahren zur Herstellung eines Fahrzeugluftreifens mit einer Lauffläche, auf der im Schulterbereich zusätzliche Schulterbänder aus Kautschukmaterial aufgelegt werden. Derartige Verfahren sind beispielsweise aus der EP 0 131 122 B1 und aus der DE 33 25 017 C2 bekannt. In beiden Druckschriften wird ein Schulterband als Verbindungsband zwischen Seitenwand und Lauffläche ausgebildet, das die Anbindung der Seitenwand an die Lauffläche, die aus unterschiedlichem Kautschukmaterial bestehen, verbessern soll. Die Schulterstreifen werden mit der Lauffläche zusammen in einem Mehrfachextruder extrudiert und mit dieser verbunden. Da die Schulterstreifen zur Verbesserung der Anbindung der Seitenwand an das Lauf flächenmaterial relativ großer Berührflächen für die Herstellung eines ausreichenden Haftkontaktes zwischen Schulterstreifen und Seitenwand als auch zur Herstellung eines ausreichenden Haftkontaktes zwischen Schulterstreifen und Lauffläche erfordert, sind derartige Schulterstreifen relativ dick und die Schulterstreifen und ihre Verbindung mit dem Laufstreifen durch Zusammenextrusion hinreichend zuverlässig herstellbar.

Derartig dicke Schulterstreifen beeinflussen jedoch die Fahreigenschaften des Reifens, was bei Konstruktion und Herstellung des Reifens zusätzlich berücksichtigt werden und kontinuierlich überwacht werden muß.

Das Zusammenextrusionsverfahren von Lauffläche und Schulterabdeckstreifen ermöglicht eine gute Durchmischung des Schulterstreifenmaterials, eine Erwärmung in ähnlichem Temperaturbereich wie beim ebenfalls mitextrudierten Laufstreifen. Das gut durchgemischte Material kann aufgrund der angepaßten Temperatur zwischen Schulterstreifen und Lauffläche direkt im Extruder automatisiert auf die Lauffläche aufgelegt werden.

Für Anwendungen, in denen derartig dicke Schulterstreifen nicht erforderlich sind, ist es wünschenswert, möglichst dünne Schulterstreifen einzusetzen, um den Einfluß auf die Performance-Eigenschaften des Reifens, z.B. Rollwiderstand und Handling zu minimieren. Gleichbleibend dünne Schulterstreifen sind mit der aus der EP 0 131 122 B1 bzw. aus der DE 33 25 017 C2 bekannten Zusammenextrusion, nicht ohne aufwendige zusätzliche Maßnahmen, wenn überhaupt, erzielbar.

Dünn ausgebildete Spritzleisten eines Extruders unterliegen erhöhter Verschmutzungsgefahr, die zu erhöhtem Produktionsausfall aufgrund von häufigerem Reinigungsaufwand führen kann. Die Sicherheit der Qualität der dünn extrudierten Streifen wird durch verbleibende unentdeckte Reste im dünnen Spritzspalt gefährdet. Sie können zu Vermischungen bei späteren Produktionsdurchgängen führen und durch die Verstopfung der Spritzleiste lediglich zur Teilformung des Schulterabdeckstreifens führen.

Derartig dünne Schulterbänder sind beispielsweise sinnvoll beim Einsatz von Laufflächen mit Kautschukmischungen, die Silica enthalten, bei denen zur Herabsetzung des Ableitwiderstandes der Lauffläche im Schulterbereich Schulterstreifen vorwiegend mit Ruß als Füllstoff aufgelegt werden. Trotz schlecht elektrisch ableitender Silicalauffläche ermöglicht der den Ableitwiderstand herabsetzende Schulterstreifen ein Ableiten der elektrostatischen Ladungen. Hierzu reicht ein sehr dünn ausgebildeter Schulterstreifen. Die Dicke des Schulterstreifens ist für die Ableitung lediglich von untergeordneter Bedeutung. Um die Performance- und die Rundlaufeigenschaften möglichst nicht zu beeinflussen, muss der Schulterstreifen möglichst gleichmäßig dünn ausgebildet sein. Ein derartiger Fahrzeugluftreifen mit Silica beinhaltender Lauffläche und aufgesetztem Schulterabdeckstreifen ist beispielsweise aus der EP 0 658 452 A1 bekannt.

Es ist auch bekannt, vorgefertigte, abgelängte Streifen per Hand aufzulegen. Eine gleichmäßige Dicke lässt sich dabei kaum erzielen. Eine Anpassung der Temperatur und Klebrigkeit des Streifens an die des Laufstreifens ist ebenfalls nur bedingt möglich. Ein Kalander zur Dickeneinstellung eines Streifens aus Elastomermaterial ist aus der US 5,030,079 bekannt.

Der Erfindung liegt die Aufgabe zugrunde, ein Verfahren zur Herstellung einer Lauffläche eines Fahrzeugluftreifens mit Schulterabdeckstreifen zu schaffen, bei dem auch dünne Schulterbandmaterialien zuverlässig mit im Wesentlichen gleichbleibender Dünne automatisiert aufgelegt werden können. Erfindungsgemäß wird die Aufgabe durch das Verfahren zur Herstellung einer Lauffläche eines Fahrzeugluftreifens gemäß den Merkmalen von Anspruch 1 gelöst. Das Schutlerbandmaterial und das Laufflächenbandmaterial werden gemeinsam bandförmig extrudiert, so dass es gut vermischt und im Wesentlichen in seiner Form erzeugt wird. Das gut vermischte so vorgeformte Material wird im Anschluss daran in einem Kalander auf die endgültige Dicke eingestellt. Die Kalandrierung ermöglicht eine zuverlässig gleichbleibend dünne Ausbildung des Materialsteifens. Dabei kann Dicke und Dickenverlust beim Kalandrieren entsprechend fein eingestellt werden.

Die Erfindung ermöglicht die Fertigung an lediglich einer Maschine ohne Zeitverlust. Ein Umrüsten der Spritzleiste beim Verändern der gewünschten Dicke ist nicht erforderlich. Da die Dickeneinstellung im Blickbereich vor bzw. nach dem Kalander einer guten Sichtkontrolle unterliegt, sind gegenüber der fehlenden Sichtkontrolle im herkömmlichen Mehrfachextruder die Kontrolle der Dickenanteile von Schulterabdeckstreifen und Laufstreifen verbessert und die Qualität der Dicke von Laufstreifen und Schulterabdeckstreifen erhöht.

Die Feineinstellung mit Hilfe des Kalanders ermöglicht die Erzielung eines gezielten profilierten dünnen Verlaufes auch während des Fertigungsprozesses. Die Feineinstellung der Temperatur in Abhängigkeit vom Schrumpfverhalten des Materials ermöglicht eine Optimierung des Schrumpfverhaltens und des Klebrigkeitsverhaltens des Schulterabdeckstreifens zum Klebrigkeitsverhalten des Laufstreifens.

Das Verfahren ermöglicht die gleichzeitige Herstellung von Laufstreifen und Schulterabdeckstreifen in einen gemeinsamen Extruder und Verbindung unter Klebe- und Temperaturbedingungen, auch bei gleichbleibend dünnen Schulterabdeckstreifen. Die Fertigung in nur einem Durchgang ermöglicht Herstellung oder zusätzliche Trägerschicht schützt den Schulterabdeckstreifen. Ein Zwischenlager zur Speicherung der gefertigten Schulterabdeckstreifen ist nicht erforderlich.

Besonders vorteilhaft ist das Verfahren gemäß den Merkmalen von Anspruch 2, wonach das so fertiggestellte dünne schulterband direkt auf die Lauffläche aufgelegt und entsprechnd der Umfangslänge abgelängt wird, so dass es in seiner Länge unmittelbar am jeweils zu bestückenden Laufflächenabschnitt auf dessen Länge abgestimmt wird. Durch dieses Verfahren lassen sich die Vorteile des extruders hinsichtlich der besonders feinen dünnen Dickeneinstellung sowie der direkten Anpassung der Länge des Schulterbandes am Ort ihres Einsatzes auf der Lauffläche einfach autoniatisciert erzielen. Aufwendige Handauflegung von einzeln abgeschnittenen Steifen, die vorher mehr oder weniger genau hinsichtlich ihrer Dickenausbildung erzeugt und durch Manipulation, beispielsweise durch Strecken des Steifens, erzielt werden, kann vermieden werden.

Praktische Ausgestaltungen der Erfindung sehen gemäß den Ansprüchen 3 und 4 vor, dass durch Kalandrierung die Dicke des Schulterbandes auf 0,5 - 2 mm eingestellt wird, und dass der Laufstreifen aus einer Silica-Mischung und das Schulterband aus einer Ruß-Mischung bestehen.

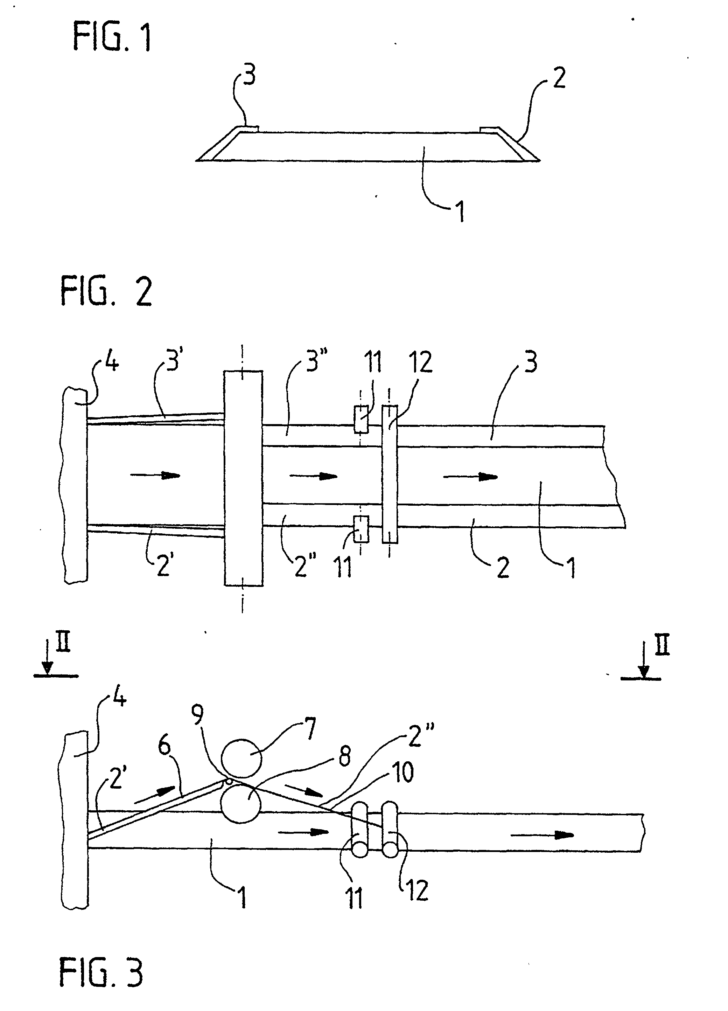

Die Erfindung wird im Folgenden anhand der in den Figuren 1 bis 3 schematisch dargestellten Ausführung mehr erläutert. Hierin zeigen
Figur 1:
   Querschnitt durch erindungsgemäßen Laufstreifen mit aufgelegtem Schulterstreifen
Figur 2:
   schematische Darstellung der Fertigung in Seitenansicht
Figur 3:
   Fertigung von Figur 2 in Sicht gemäß Schnitt II-II.

Figuren 2 und 3 zeigen beispielhaft schematisch die erfindungsgemäße Herstellung eines Laufstreifens 1 mit dünnen Schulterstreifen 2 und 3. Aus den Spritzleisten 4 eines Mehrfachextruders werden ein Laufstreifen 1 und zwei seitliche Schulterstreifen 2 und 3 extrudiert. In einem ersten Förderbereich 1, 2', 3' werden die Schulterabdeckstreifen über eine Fördereinrichtung 6 bekannter Art zu einem Kalander mit zwei Kalanderwalzen 7, 8 bekannter Art kontinuierlich gefördert. Zwischen den Kalanderwalzen 7, 8 werden die Schulterabdeckstreifen 2 bzw. 3 fein kalandriert. Dabei bildet sich vor den Kalanderwalzen in bekannter Weise ein Rollwulst 9. Die fein kalandrierten Schulterstreifen 2 bzw. 3 werden in einem zweiten Förderabschnitt 2'' bzw. 3'' zu einer Walzenanordnung 11 bzw. 12 in bekannter Art gefördert. Mit Hilfe der Walzen 11, 12 werden die fein kalandrierten Schulterabdeckstreifen auf das direkt von der Spritzleiste 4 an die Walzen 11, 12 geförderten Laufstreifenband 1 angewalzt. Im Anschluß an die Walze 12 wird der Laufstreifen mit den aufmontierten Schulterabdeckstreifen 2, 3 zur Reifenaufbautrommel bekannter Art gefördert. Der Laufstreifen 1 zusammen mit den Schulterabdeckstreifen 2 und 3 wird entweder im Anschluß an die Walzen 12 auf die gewünschte Umfangslänge des Laufstreifens abgelängt oder bandförmig an die Aufbautrommel gefördert und erst auf der Aufbautrommel abgelängt.

Es ist denkbar, die Fördereinrichtung 6 beispielsweise als Förderrohr oder Förderband bekannter Art auszubilden. Zur Herstellung von Schulterstreifen bei Fahrzeugluftreifen mit Silica enthaltenden Laufstreifenmischungen ist es denkbar, zur Herabsetzung des elektrischen Ableitwiderstandes der Lauffläche die Schulterabdeckstreifen mit gegenüber der Silica enthaltenden Laufstreifenmischung deutlich besser leitender Mischung, z.B. mit hohen Rußanteilen auszubilden.

Die Kalanderwalzen 7,8 sind in bekannter Weise so ausgebildet, daß eine Feinregulierung der Temperatur sowie der Viscositätseigenschaften der Schulterabdeckstreifen und der Klebeeigenschaft ermöglicht wird. Hierzu sind die Kalander in bekannter Weise mit Sensoren und gesteuerten Heiz- und Kühleinrichtungen ausgebildet. Durch Verändern der Position der Kalanderwalzen zueinander wird sich der gewünschte Dickenverlauf der Schulterstreifen sehr genau entsprechend den individuellen Bedürfnissen einstellen.

Die Temperatur der Schulterabdeckstreifen beträgt im Kalander beispielsweise 90° C. Falls der Schulterabdeckstreifen ein stärkeres Schrumpfverhalten aufweisen sollte, wird die Temperatur mit Hilfe des Kalanders hochreguliert.

Die Schulterabdeckstreifen weisen eine Dicke von < 2mm, beispielsweise 0,5 mm in der Bodenaufstandsfläche auf, um gute Performance-Eigenschaften zu gewährleisten. Im Bereich des Schulterumschlags kann die Dicke auch > 2 mm gewählt sein. Derartige Dickenprofilierung ist mittels Kalander individuell einstellbar.

Es ist denkbar, die Breite der Schulterabdeckstreifen, falls erforderlich, beispielsweise mit seitlichen Messern, im Anschluß an den Kalander exakt einzustellen. Hierzu können beispielsweise die Walzen 11 als seitlich in ihrer Position einstellbare Führungswalzen und zwischen den Walzen 11 und 12 seitlich in ihrer Position einstellbare Schneidmesser angeordnet werden.

### Bezugszeichenliste

- 1: Laufstreifen
- 2: Schulterabdeckstreifen
- 3: Schulterabdeckstreifen
- 4: Spritzleiste Extruder
- 5 6: Förderbereich
- 7: Kalanderwalze
- 8: Kalanderwalze
- 9: Rollwulst
- 10: Förderbereich
- 11: Walze
- 12: Walze

## Patentansprüche

1. Verfahren zur Herstellung einer Lauffläche (1) eines Fahrzeugluftreifens mit aufgelegtem Schulterabdeckstreifen (2; 3), bei welchem in einem Mehrfachextruder (4) sowohl Schulterband (2; 3) als auch Laufflächenband (1) gemeinsam kontinuierlich erzeugt werden,
**dadurch gekennzeichnet, dass**
das Schulterband (2; 3) und das Laufflächenband (1) nachgeschaltet auf unterschiedlichen Förderwegen (2', 2"; 3', 3") gefördert werden, wobei das Schulterband (2; 3) durch einen Kalander (7; 8) zur Dickeneinstellung gefördert und kalandriert wird, wobei nach Kalandrierung des Schulterbandes (2; 3) dieses mit dem Laufflächenband (1) verbunden wird.

2. Verfahren zur Herstellung einer Lauffläche nach Anspruch 1, **dadurch gekennzeichnet, dass** das Schulterband (2; 3) nach Kalandrierung auf den Schulterbereich der Lauffläche (1) aufgelegt und entsprechend der Umfangslänge der Lauffläche (1) abgelängt wird.

3. Verfahren zur Herstellung einer Lauffläche nach Anspruch 1 oder 2, **dadurch**
**gekennzeichnet, dass** die Dicke des Schulterbandes (2; 3) durch Kalandrierung auf 0,5 bis 2 mm eingestellt wird.

4. Verfahren zur Herstellung einer Lauffläche nach einem der Ansprüche 1 bis 3, **dadurch gekennzeichnet, dass** der Laufstreifen (1) aus einer Silica-Mischung und das Schulterband (2; 3) aus einer Ruß-Mischung extrudiert werden.

## Claims

1. Method of producing a tread surface (1) for a pneumatic vehicle tyre with a shoulder covering strip (2; 3) placed thereon, wherein both shoulder strip (2; 3) and tread surface strip (1) are jointly and continuously produced in one multiple extruder (4), **characterised in that** the shoulder strip (2; 3) and the tread surface strip (1) are subsequently conveyed along different conveying paths (2', 2"; 3', 3"), the shoulder strip (2; 3) being conveyed and calendered by a calender (7; 8) for setting the thickness, and the shoulder strip (2; 3) being connected to the tread surface strip (1) after said shoulder strip has been calendered.

2. Method of producing a tread surface according to claim 1, **characterised in that** the shoulder strip (2; 3) is placed upon the shoulder region of the tread surface (1) after the calendering process and is cut to length according to the circumferential length of the tread surface (1).

3. Method of producing a tread surface according to claim 1 or 2, **characterised in that** the thickness of the shoulder strip (2; 3) is set to between 0.5 and 2 mm by calendering.

4. Method of producing a tread surface according to one of claims 1 to 3, **characterised in that** the tread strip (1) is extruded from a silica mixture, and the shoulder strip (2; 3) is extruded from a carbon black mixture.

## Revendications

1. Procédé de fabrication d'une surface de roulement (1) d'un pneumatique de véhicule, comportant une bande de recouvrement d'épaulement (2 ; 3) accolée, procédé dans lequel on produit de façon continue et commune, dans une extrudeuse (4) multiple, aussi bien une bande d'épaulement (2 ; 3) qu'une bande de surface de roulement (1),
**caractérisé en ce que** la bande d'épaulement (2 ; 3) et la bande (1) de la surface de roulement sont transportées en aval sur différentes trajectoires de transport (2', 2" ; 3', 3"), où la bande d'épaulement (2 ; 3), pour le réglage de l'épaisseur, *est* transportée et calandrée à travers une calandre (7 ; 8) et où, après calandrage de la bande d'épaulement (2 ; 3), celle-ci est reliée à la bande (1) de la surface de roulement.

2. Procédé de fabrication d'une surface de roulement selon la revendication 1, **caractérisé en ce que** la bande d'épaulement (2 ; 3) est, après calandrage, appliquée sur la zone d'épaulement de la surface de roulement (1) et coupée à la longueur correspondant à la longueur circonférentielle de la surface de roulement (1).

3. Procédé de fabrication d'une surface de roulement selon la revendication 1 ou 2, **caractérisé en ce que** l'épaisseur de la bande d'épaulement (2 ; 3) est réglée, par calandrage, à une épaisseur comprise entre 0,5 mm et 2 mm.

4. Procédé de fabrication d'une surface de roulement selon l'une quelconque des revendications 1 à 3, **caractérisé en ce que** la bande de roulement (1) est extrudée à partir d'un mélange de silice, la bande d'épaulement (2 ; 3) étant extrudée à partir d'un mélange de noir de carbone.
